# EUROPEAN PATENT APPLICATION

(11) **EP 4 830 600 A1**
(43) Date of publication of application: **28.10.2026**
(21) Application number: 24906399.1
(22) Date of filing: 18.12.2024
(51) Int. Cl.: A47J 31/40

(54) **LIQUID MATERIAL DISPENSING METHOD AND BEVERAGE MAKING DEVICE**

(30) Priority: 20.12.2023 CN 202311764488
(71) Applicant: Suzhou Megarobo Technologies Co., Ltd., Suzhou, Jiangsu 215000 (CN)
(72) Inventor: ZHU, Wei, Suzhou, Jiangsu 215000 (CN); WANG, Jiangfeng, Suzhou, Jiangsu 215000 (CN); MIAO, Xiongfei, Suzhou, Jiangsu 215000 (CN)
(74) Representative: Grünecker Patent- und Rechtsanwälte PartG mbB
(86) International application number: PCT/CN2024/140293
(87) International publication number: WO 2025/130920

(57) **Abstract**

The present application provides a liquid material dispensing method and a beverage making device. The dispensing method comprises: when a liquid dispensing device dispenses a liquid material, using a controller to control a liquid pump to perform a first rotation operation to dispense the liquid material, and when the liquid dispensing operation is finished, using the controller to control the liquid pump to perform a second rotation operation in the reverse direction. Thus, by means of the liquid dispensing method, when the liquid dispensing operation is finished, the material in a liquid delivery pipe can be pumped back to drive the liquid material in the liquid delivery pipe towards a liquid storage tank, so as to weaken the ability of the liquid material in the liquid delivery pipe to drip from a liquid outlet, thereby effectively solving the problem of dripping of the liquid material in the liquid delivery pipe when the liquid dispensing operation is finished, further effectively solving the problem of inaccurate liquid dispensing of the liquid material, and maintaining the desired taste of the beverage.

## Description

This application claims the priority to Chinese Patent Application No. 202311764488.0, titled "LIQUID MATERIAL DISPENSING METHOD AND BEVERAGE MAKING DEVICE ", filed on December 20, 2023 with the China National Intellectual Property Administration, which is incorporated herein by reference in its entirety.

### FIELD

The present disclosure relates to the technical field of automation equipment, and in particular to a liquid material dispensing method and a beverage preparation apparatus.

### BACKGROUND

In industries such as tea and coffee beverages, intelligent liquid dispensing apparatuses, also known as beverage preparation apparatuses, are increasingly used to reduce labor costs and enhance the efficiency of beverage preparation. The apparatuses are capable of automatically dispensing various liquids such as tea, coffee, and syrup according to recipes.

However, a problem of conventional intelligent liquid dispensing apparatuses is inaccurate liquid dispensing. An important cause of inaccurate liquid dispensing is that after dispensing has ended, the residual liquid left in the tubing and at the liquid outlet continues to drip due to gravity. For materials with high concentration and strong flavor, such as syrup, the amount of dripped liquid is sufficient to noticeably alter the taste of the beverage, seriously affecting the taste of the beverage.

To date, no effective improvement solution has been provided to address the problem of inaccurate liquid dispensing caused by dripping.

### SUMMARY

In view of this, a beverage preparation apparatus is provided according to the present disclosure, and the solutions are as follows.

A liquid material dispensing method for controlling a liquid dispensing apparatus to dispense a liquid material is provided. The liquid dispensing apparatus includes a liquid storage tank, a liquid outlet, a liquid pump, and a controller, the liquid storage tank being configured for storing the liquid material, the liquid storage tank being connected to the liquid outlet via a liquid delivery tube, and the liquid pump being configured to output, controlled by the controller, the liquid material stored in the liquid storage tank via the liquid outlet. The dispensing method includes:
controlling, by the controller, a motor in the liquid pump to perform a first rotation operation in a first direction, to output the liquid material via the liquid outlet; and
in response to a condition for stopping outputting the liquid material being triggered, controlling, by the controller, the motor in the liquid pump to perform a second rotation operation in a second direction to retract the liquid material in the liquid delivery tube, where the second direction is opposite to the first direction.

Optionally, the controlling, by the controller, the motor in the liquid pump to perform the second rotation operation in the second direction includes:
obtaining a first rotation amount; and
controlling, by the controller, the motor in the liquid pump to perform the second rotation operation based on the first rotation amount.

Optionally, the obtaining the first rotation amount includes:
determining a reverse rotation coefficient; and
determining the first rotation amount based on a product of the reverse rotation coefficient and a preset rotation amount.

Optionally, the determining the reverse rotation coefficient includes:
obtaining a viscosity of the liquid material;
determining, based on the viscosity and a first correspondence, the reverse rotation coefficient for the second rotation operation performed by the motor in the liquid pump, where
the first correspondence is a pre-configured correspondence between the viscosity of the liquid material and the reverse rotation coefficient.

Optionally, the obtaining the viscosity of the liquid material includes:
obtaining a current temperature of the liquid material in the liquid storage tank;
determining a current viscosity of the liquid material in the liquid storage tank based on the current temperature of the liquid material in the liquid storage tank and a second correspondence, where
the second correspondence is a pre-configured correspondence between the temperature of the liquid material and the viscosity.

Optionally, the dispensing method further includes:
recording the first rotation amount; and
after the second rotation operation is completed, compensating, in response to the motor in the liquid pump performing the first rotation operation in the first direction for a second time, a rotation amount of the motor in the liquid pump during the first rotation operation performed for the second time, based on the first rotation amount.

A beverage preparation apparatus includes a liquid dispensing apparatus, the liquid dispensing apparatus includes a liquid storage tank, a liquid outlet, a liquid pump, and a controller, where
the liquid storage tank is configured for storing a liquid material, the liquid storage tank is connected to the liquid outlet via a liquid delivery tube, the liquid pump is configured to be controlled by the controller to output the liquid material stored in the liquid storage tank via the liquid outlet; and
the controller is configured to: control a motor in the liquid pump to perform a first rotation operation in a first direction, to output the liquid material via the liquid outlet; and in response to a condition for stopping outputting the liquid material being triggered, control the motor in the liquid pump to perform a second rotation operation in a second direction to retract the liquid material in the liquid delivery tube, where the second direction is opposite to the first direction.

Optionally, the controller is further configured to: record a first rotation amount; and after the second rotation operation is completed, in response to the motor in the liquid pump performing the first rotation operation in the first direction for a second time, compensate a rotation amount of the motor in the liquid pump during the first rotation operation performed for the second time, based on the first rotation amount.

Optionally, the liquid storage tank includes multiple liquid storage sub-tanks, and the multiple liquid storage sub-tanks are configured for storing their respective materials; and
the liquid pump includes multiple liquid sub-pumps, the multiple liquid sub-pumps are in one-to-one correspondence with the multiple liquid storage sub-tanks and are configured to be controlled by the controller to deliver the respective materials in the multiple liquid storage sub-tanks to the liquid outlet via the liquid delivery tube.

Optionally, the beverage preparation apparatus further includes an input unit configured to determine a material recipe for a current to-be-prepared beverage based on a user input, where the controller is configured to control at least one liquid sub-pump of the multiple liquid sub-pumps to perform the first rotation operation based on the material recipe, and control the at least one liquid sub-pump to perform the second rotation operation.

Compared with the conventional technology, the technical solution of the present disclosure provides the following beneficial effects.

The dispensing method according to the present disclosure includes: when the liquid dispensing apparatus is used for liquid material dispensing, the liquid pump is controlled by the controller to perform the first rotation operation to output the liquid material; and after the liquid output operation is performed, the liquid pump is controlled by the controller to perform the second rotation operation in the opposite direction to the direction of the first rotation operation. Thus, with this dispensing method, after the liquid output operation is performed, a retraction operation is performed on the liquid material in the liquid delivery tube to drive the liquid material in the liquid delivery tube toward the liquid storage tank, thereby reducing the probability of the liquid material in the liquid delivery tube dripping from the liquid outlet. This effectively prevents the liquid material in the liquid delivery tube from dripping after the liquid output operation is performed, thereby effectively addressing the issue of inaccurate liquid dispensing of the liquid material, contributing to ensure the taste of the beverage.

### BRIEF DESCRIPTION OF THE DRAWINGS

For more clearly illustrating embodiments of the present disclosure or the technical solutions in the conventional technology, drawings referred to describe the embodiments or the conventional technology will be briefly described hereinafter. Apparently, the drawings in the following description are only some examples of the present disclosure, and for those skilled in the art, other drawings may be obtained based on these drawings without any creative efforts.

The structure, scale, and size shown in the drawings of this specification are only used for cooperation with the contents disclosed in the specification for those skilled in the art to understand and read, instead of limiting the conditions under which the present disclosure can be implemented, and thus have no technically substantive significance. Any structural modifications, changes in scale, or adjustments in size without affecting effectiveness and purpose of the present disclosure should fall within the scope of the technical contents disclosed in the present disclosure.
FIG. 1 is a schematic structural diagram of a beverage preparation apparatus according to an embodiment of the present disclosure; and
FIG. 2 is a flowchart of a liquid material dispensing method according to an embodiment of the present disclosure.

### DETAILED DESCRIPTION OF THE EMBODIMENTS

Technical solutions according to the embodiments of the present disclosure will be described clearly and completely as follows in conjunction with the accompany drawings in the embodiments of the present disclosure. It is obvious that the described embodiments are only a part of the embodiments according to the present disclosure, rather than all of the embodiments. All the other embodiments obtained by those skilled in the art based on the embodiments in the present disclosure without any creative work belong to the scope of protection of the present disclosure.

To make the above objects, features, and advantages of the present disclosure understandable, the present disclosure is further described in detail below with reference to the drawings and specific embodiments.

As described in the background section, in a conventional beverage preparation apparatus, after the liquid output operation is completed, a phenomenon of liquid dripping occurs due to factors such as pressure in a liquid delivery tube and gravity, resulting in inaccurate liquid dispensing. Inaccurate liquid dispensing not only affects the taste of a current to-be-prepared beverage, but also causes inaccurate liquid dispensing for the next to-be-prepared beverage, thereby affecting the taste of the next to-be-prepared beverage. Especially for some key materials with high concentration and strong flavor, such as syrup, inaccurate liquid dispensing may seriously affect the taste of the beverage, and thus adversely affect the customer experience.

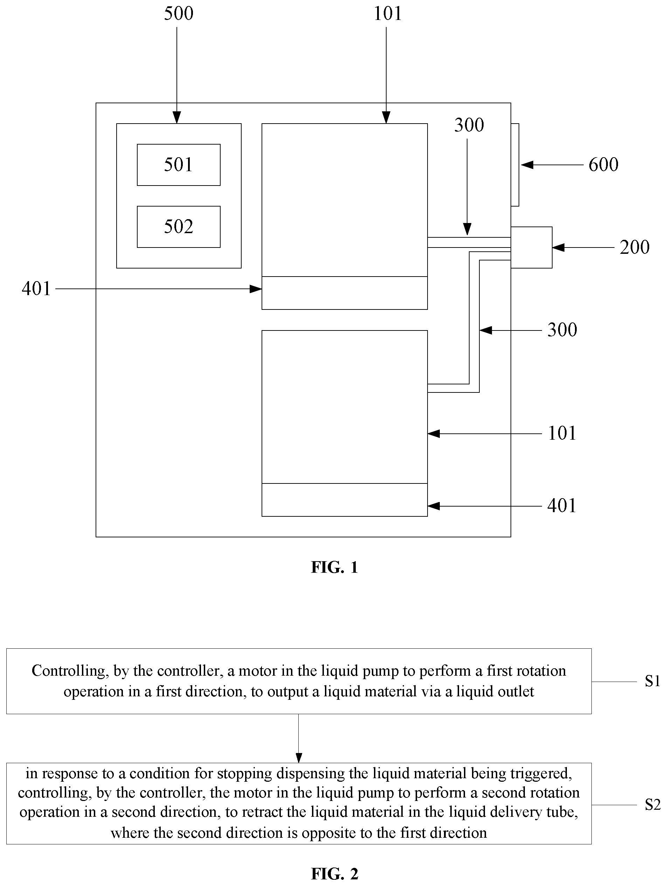

Based on this, a liquid material dispensing method is provided according to the present disclosure. The dispensing method is used for controlling a liquid dispensing apparatus to dispense a liquid material. As shown in FIG. 1, the liquid dispensing apparatus includes: a liquid storage tank 100, a liquid outlet 200, a liquid pump 400, and a controller 500. The liquid storage tank 100 is configured for storing the liquid material, and the liquid storage tank 100 is connected to the liquid outlet 200 via a liquid delivery tube 300 such that the liquid material in the liquid storage tank 100 can be delivered to the liquid outlet 200 and is outputted via the liquid outlet 200. The liquid pump 400 is arranged in the liquid storage tank 100, and is configured to output, controlled by the controller 500, the liquid material stored in the liquid storage tank 100 via the liquid outlet 200. As shown in FIG. 2, which is a flowchart of a liquid material dispensing method according to the present disclosure, the dispensing method includes the following steps.

S1: controlling, by the controller 500, a motor in the liquid pump 400 to perform a first rotation operation in a first direction, to output the liquid material via the liquid outlet 200. That is, the material in the liquid storage tank 100 is driven to the liquid outlet 200, and is outputted via the liquid outlet 200. In other words, the first rotation operation is a liquid output operation.

S2: in response to a condition for stopping outputting the liquid material being triggered, controlling, by the controller 500, the motor in the liquid pump 400 to perform a second rotation operation in a second direction, where the second direction is opposite to the first direction, to retract the liquid material in the liquid delivery tube 300. Thus, the liquid material in the liquid delivery tube 300 is driven toward the liquid storage tank 100 such that the liquid material in the liquid delivery tube 300 moves toward the liquid storage tank 100. In practical applications, the condition for stopping outputting the liquid material may be a preset trigger condition, such as a weight of the outputted liquid reaching a preset weight (for example, an electronic scale is placed under a cup for receiving the liquid material for weighing, and the weighing result is fed back to the controller 500 in real time via the electronic scale), a rotation amount of the motor in the liquid pump 400 during the first rotation operation reaching a preset rotation amount, or a rotation duration of the motor in the liquid pump 400 during the first rotation operation reaching a preset duration.

From the above, in the dispensing method, the controller 500 controls the liquid pump 400 to perform the first rotation operation to output the liquid material, and after the liquid output operation is performed, the controller 500 controls the liquid pump 400 to perform the second rotation operation in the opposite direction to the direction of the first rotation operation. Thus, with this dispensing method, after the liquid output operation is performed, a retraction operation is performed on the material in the liquid delivery tube 300 to drive the liquid material in the liquid delivery tube 300 toward the liquid storage tank 100, thereby reducing the probability of the liquid material in the liquid delivery tube 300 dripping from the liquid outlet 200. This effectively prevents the liquid material in the liquid delivery tube 300 from dripping after the liquid output operation is completed, thereby effectively addressing the issue of inaccurate liquid dispensing of the liquid material, contributing to ensure the taste of the beverage.

For step S2, in an embodiment of the present disclosure, the controlling, by the controller, the motor in the liquid pump to perform the second rotation operation in the second direction includes:
obtaining a first rotation amount, where the first rotation amount is a required rotation amount of the motor in the liquid pump 400 during the second rotation operation; and
controlling, by the controller 500, the motor in the liquid pump 400 to perform the second rotation operation based on the first rotation amount, to retract the liquid material in the liquid delivery tube 300.

It can be seen from the above that the purpose of controlling the liquid pump 400 by the controller 500 to perform the second rotation operation is to drive the liquid material in the liquid delivery tube 300 toward the liquid storage tank 100 after the first rotation operation is completed, such that the liquid material in the liquid delivery tube 300 moves toward the liquid storage tank 100 or exhibits a trend of moving toward the liquid storage tank 100, rather than simply retracting all the liquid material in the liquid delivery tube 300 into the liquid storage tank 100. For this purpose, the rotation amount of the liquid pump 400 during the second rotation operation needs to be controlled. The rotation amount of the second rotation operation should not be too large, otherwise more time and power are wasted. The rotation amount of the second rotation operation should not be too small, otherwise the rotation amount may be insufficient to drive the liquid material in the liquid delivery tube 300 toward the liquid storage tank 100. Therefore, the required rotation amount of the second rotation operation, i.e., the first rotation amount, needs to be reasonably determined to control the rotation amount of the liquid pump 400 during the second rotation operation, such that the liquid material in the liquid delivery tube 300 neither drips from the liquid outlet 200 nor is retracted by an excessively large distance.

Based on the above embodiments, in an embodiment of the present disclosure, the obtaining the first rotation amount includes:
determining a reverse rotation coefficient, where different reverse rotation coefficients are provided for retraction of different liquid materials; and
determining the first rotation amount based on a product of the reverse rotation coefficient and a preset rotation amount. That is, the first rotation amount equals to the product of the reverse rotation coefficient and the preset rotation amount. The preset rotation amount is a preset default rotation amount, which is related to parameters of inherent structure and performance of the liquid pump.

It should be noted that due to inherent properties of different liquid materials, the required rotation amount for retraction is generally different from the preset rotation amount. Therefore, it is required to determine the reverse rotation coefficient corresponding to the liquid material in the liquid delivery tube 300, and then obtain the required rotation amount for retracting the liquid material in the liquid delivery tube 300, i.e., the first rotation amount, based on the product of the reverse rotation coefficient and the preset rotation amount, to retract the liquid material in the liquid delivery tube 300.

Based on the above embodiments, in an embodiment of the present disclosure, the determining the reverse rotation coefficient includes:
obtaining a viscosity of the liquid material; and
determining, based on the viscosity and a first correspondence, the reverse rotation coefficient for the second rotation operation performed by the motor in the liquid pump 400.

The first correspondence is a pre-configured correspondence between the viscosity of the liquid material and the reverse rotation coefficient. The viscosity of the liquid material is inversely proportional to the reverse rotation coefficient for the second rotation operation. That is, the higher the viscosity of the liquid material, the smaller the reverse rotation coefficient for the second rotation operation performed by the liquid pump, and consequently, the smaller the first rotation amount. Conversely, the lower the viscosity of the liquid material, the greater the reverse rotation coefficient for the second rotation operation performed by the liquid pump, and consequently, the greater the first rotation amount. The viscosity of the material is one of the important factors affecting the retraction rotation amount when retracting the liquid material. Liquids with low viscosity and strong fluidity are more prone to drip, and thus a relatively greater reverse rotation coefficient is required. Conversely, liquids with high viscosity and poor fluidity are less prone to drip, and thus a relatively smaller reverse rotation coefficient may be provided. In this way, the retraction operation is implemented accurately, both meeting the requirement of preventing dripping and avoiding excessive retraction that would waste more power and time.

It should be noted that different liquid materials have different viscosities. Thus, each liquid material exhibits a respective correspondence between the viscosity and the reverse rotation coefficient, which is obtained in advance and pre-configured in the controller 500 for use. Specifically, the correspondence may be stored in a built-in memory of the controller 500 or a memory associated with the controller. Obtaining the correspondence between the viscosity of the liquid material and the reverse rotation coefficient includes the following steps. After the liquid pump 400 performs the first rotation operation, the liquid pump is controlled to perform the second rotation operation. Through multiple experiments, for a certain viscosity, the retraction rotation amount that can keep the weight of the material dripping from the liquid outlet 200 within an allowable range is obtained. Subsequently, for different viscosities, respective retraction rotation amounts that can keep the weight of the material dripping from the liquid outlet 200 within the allowable range are obtained. The reverse rotation coefficient is a ratio of the default rotation amount to an actual retraction rotation amount, and thus the correspondence between the reverse rotation coefficient and the viscosity is obtained.

Based on the above embodiments, in an embodiment of the present disclosure, the obtaining the viscosity of the liquid material includes:
obtaining a current temperature of the liquid material in the liquid storage tank 100, where the current temperature of the liquid material in the liquid storage tank 100 is obtained by a temperature sensor, and the like; and
determining a current viscosity of the liquid material in the liquid storage tank 100 based on the current temperature of the liquid material in the liquid storage tank 100 and a second correspondence.

The second correspondence is a pre-configured correspondence between a temperature of the material and the viscosity, and different liquid materials have respective pre-configured correspondences between their temperature and viscosity.

The viscosity of a liquid is related to its temperature, a higher temperature corresponds to a lower viscosity. Therefore, when determining the viscosity of the liquid material in the liquid delivery tube 300, the current temperature of the liquid material should also be taken into consideration. Thus, in the dispensing method, the current viscosity of the liquid material in the liquid storage tank 100 is determined based on the current temperature of the liquid material in the liquid storage tank 100 and the second correspondence, to further optimize the determination of the viscosity and the reverse rotation coefficient, improving the accuracy of the retraction operation.

It should be noted that the correspondence between the material temperature and viscosity of the liquid material, i.e., the second correspondence, is obtained through experiments and stored in the controller 500 in advance. When needed, a correspondence curve is retrieved to obtain the viscosity corresponding to the current material temperature, and further obtain the reverse rotation coefficient corresponding to the current material temperature, thereby achieving precise control of the retraction rotation amount, i.e., the first rotation amount, and effectively preventing the material from dripping from the liquid outlet 200. Taking mango puree as an example, obtaining the viscosity curve of the mango puree has the following steps. In a laboratory, the mango puree is placed in a test cup. Within a temperature range from T1 to T4, the test cup containing the mango puree is placed in a constant-temperature water bath instrument, and a usage scenario temperature is set to T1, T2, T3, and T4 (T1 < T2 < T3 < T4), respectively. Then, a high-precision viscometer is used to measure the viscosities Y1, Y2, Y3, and Y4 at temperatures T1, T2, T3, and T4, respectively. Y1, Y2, Y3, and Y4 exhibit a linear relationship with their corresponding temperatures, and specifically, the lower the temperature, the higher the viscosity; conversely, the higher the temperature, the lower the viscosity. Based on the known temperatures and viscosities, along with the expression Y = -aT + b, values of a and b are determined, to obtain the viscosity curve of the mango puree. Thus, in subsequent practical applications, the viscosities of the mango puree at different temperatures can be obtained.

It should be noted that different materials have different requirements for storage temperature, which results in different temperatures of the liquid storage tanks 100 storing different liquid materials. However, before a liquid material is placed into the corresponding liquid storage tank 100, the temperature of the liquid material may not be the same as that of the corresponding liquid storage tank 100. If the temperature of the material before being placed into the corresponding liquid storage tank 100 is different from the temperature of the liquid storage tank 100, it will take some time for the material to be cooled down or heated up to reach the same temperature as the corresponding liquid storage tank 100. During this period, the temperature of the material is varying, and the viscosity of the material is also varying. Accordingly, the first rotation amount of the liquid pump 400 during the second rotation operation will also vary. Therefore, during this period, the temperature of the liquid material needs to be detected to adjust the first rotation amount of the liquid pump 400 during the second rotation operation in real time, thereby preventing material dripping from the liquid outlet 200.

For the dispensing method, in an embodiment of the present disclosure, the dispensing method further includes the following steps.

S3: recording the first rotation amount.

S4: after the second rotation operation is completed, in response to the motor in the liquid pump 400 performing the first rotation operation in the first direction for a second time (that is, a current beverage has been prepared, and a next cup of beverage is to be prepared and a liquid output operation is performed for a second time), compensating a rotation amount of the motor in the liquid pump 400 during the first rotation operation performed for the second time, based on the first rotation amount. That is, the rotation amount of the first rotation operation performed for the second time is a sum of the first rotation amount and a rotation amount currently required.

Since the second rotation operation is performed by the liquid pump 400 before, the liquid material in the liquid delivery tube 300 is driven to move toward the liquid pump 400, indicating no liquid material at the liquid outlet 200. Due to the second rotation operation, the liquid in the liquid delivery tube 300 is retracted by a certain distance toward the liquid pump 400. That is, a part of the liquid delivery tube 300 near the liquid outlet 200 is empty. Thus, when performing the next first rotation operation, compensation is required for the previous second rotation operation to compensate for the above distance. Then, a liquid output operation is performed based on the required liquid output amount for the second cup of beverage. If the above distance is not compensated for and the liquid output operation is performed directly based on the liquid output amount for the second cup of beverage, the liquid in the liquid delivery tube will firstly move by the above distance toward the liquid outlet 200 before being outputted, and thus part of the liquid is used to fill the above empty space corresponding to the above distance and actually is not outputted, resulting in inaccurate liquid dispensing.

For example, when preparing the second cup of beverage, firstly, the required liquid output amount for the first rotation operation of the liquid pump 400 performed for the second time is obtained based on the recipe of the current beverage. That is, the liquid output amount for the liquid output operation for the second time is obtained.

A third rotation amount is obtained based on the above liquid output amount. The third rotation amount is the rotation amount without considering the previous second rotation operation of the liquid pump 400.

Based on a sum of the first rotation amount and the third rotation amount, the rotation amount required for performing the first rotation operation to prepare the current beverage is obtained. For example, the number of reverse rotation revolutions of the liquid pump 400 during the second rotation operation is 50, i.e., the first rotation amount is 50 revolutions. The number of forward rotation revolutions obtained based on the liquid output amount for the second time is 200, i.e., the third rotation amount is 200 revolutions. Thus, the number of forward rotation revolutions of the liquid pump 400 during the first rotation to prepare the second cup of beverage is 250 revolutions.

Correspondingly, a beverage preparation apparatus is further provided according to the present disclosure. As shown in FIG. 1, a schematic structural diagram of a beverage preparation apparatus according to the present disclosure is provided. The beverage preparation apparatus includes a liquid dispensing apparatus. The liquid dispensing apparatus 1 includes: a liquid storage tank 100, a liquid outlet 200, a liquid pump 400, and a controller 500. The liquid storage tank 100 is configured for storing a liquid material. That is, the liquid storage tank 100 is a liquid storage compartment of the beverage preparation apparatus for containing materials required for beverage preparation. The liquid outlet 200 is connected to the liquid storage tank 100 via a liquid delivery tube 300, such that the material in the liquid storage tank 100 can be delivered to the liquid outlet 200 and is outputted via the liquid outlet 200. The liquid pump 400 is configured to deliver the material in the liquid storage tank 100 to the liquid outlet 200 via the liquid delivery tube 300 such that the material is outputted via the liquid outlet 200 for beverage preparation. It should be noted that the liquid delivery tube 300 needs to be immersed below the liquid level of the liquid material in the liquid storage tank 100 and is connected to the liquid outlet 200 via the liquid pump 400.

The controller 500 is configured to control a motor in the liquid pump 400 to perform a first rotation operation in a first direction, to output the liquid material via the liquid outlet 200. That is, the material in the liquid storage tank 100 is driven to the liquid outlet 200, and is outputted via the liquid outlet 200. In other words, the first rotation operation is a liquid output operation.

The controller 500 is further configured to control, in response to a condition for stopping outputting the liquid material being triggered, the motor in the liquid pump 400 to perform a second rotation operation in a second direction, where the second direction is opposite to the first direction, to retract the liquid material in the liquid delivery tube 300. Thus, the liquid material in the liquid delivery tube 300 is driven toward the liquid storage tank 100, such that the liquid material in the liquid delivery tube 300 moves toward the liquid storage tank 100.

From the above, when the beverage preparation apparatus performs liquid dispensing, the liquid pump 400 is controlled by the controller 500 to perform the first rotation operation to output the material in the liquid storage tank 100 via the liquid outlet 200 for the liquid output operation. After the liquid output operation is performed, the controller 500 controls the liquid pump 400 to perform the second rotation operation in the opposite direction to the direction of the first rotation operation, to perform a retraction operation on the material in the liquid delivery tube 300. Thus, the liquid material in the liquid delivery tube 300 is driven toward the liquid storage tank 100, reducing the probability of the liquid material in the liquid delivery tube 300 dripping from the liquid outlet 200, effectively preventing the liquid material in the liquid delivery tube 300 from dripping after the liquid output operation is completed, thereby effectively addressing the issue of inaccurate liquid dispensing of the liquid material, contributing to ensure the taste of the beverage.

It should be noted that when the liquid pump 400 outputs liquid or retracts liquid, it is the motor of the liquid pump to drive structures such as blades to rotate, and the motor rotates under the control of the controller. In practical applications, the above liquid pump may be a peristaltic pump, and the motor thereof may be a stepper motor.

It should also be noted that the first rotation operation of the liquid pump 400 is typically a forward rotation operation of the liquid pump 400, and the second rotation operation of the liquid pump 400 is typically a reverse rotation operation of the liquid pump 400, which is not limited in the present disclosure and is determined based on the actual situation.

For the controller 500, in an embodiment of the present disclosure, the controller 500 is further configured to: record a first rotation amount; and compensating, in response to the motor in the liquid pump 400 performing the first rotation operation in the first direction for a second time after the second rotation operation is completed, a rotation amount of the motor in the liquid pump 400 during the first rotation operation performed for the second time, based on the first rotation amount.

Since the second rotation operation has been performed by the liquid pump 400 before, the liquid material in the liquid delivery tube 300 has been driven to move toward the liquid pump 400, compensation is required for the previous second rotation operation when performing the next first rotation operation, to ensure the accuracy of the next liquid dispensing.

It should be noted that since a beverage is typically prepared from multiple liquid materials and different beverages require different materials. Therefore, in an embodiment of the present disclosure, the liquid storage tank 100 includes multiple liquid storage sub-tanks 101, and the multiple liquid storage sub-tanks 101 are configured for storing respective liquid materials. That is, each of the multiple liquid storage sub-tanks 101 stores a respective liquid material to meet the material requirements for beverage preparation. It is known from the above that the liquid pump 400 is configured to drive, controlled by the controller 500, the liquid material in the liquid storage tank 100. Therefore, when the multiple liquid storage sub-tanks 101 are provided, the liquid pump 400 includes multiple liquid sub-pumps 401 accordingly, and the multiple liquid sub-pumps 401 are in one-to-one correspondence with the multiple liquid storage sub-tanks 101. Each of the multiple liquid sub-pumps 401 is configured to drive the material in the corresponding liquid storage sub-tank 101 to output liquid via the liquid outlet 200, to realize beverage preparation.

Based on the above embodiments, in an embodiment of the present disclosure, the beverage preparation apparatus further includes: an input unit 600. The input unit 600 is configured to determine a material recipe for a beverage to be currently prepared based on a user input, and the material recipe includes the materials required for beverage preparation and respective proportions of the materials. Specifically, the material recipes of various beverages stored in the controller are accessible to the input unit 600. During beverage preparation, an operator may input the name of the to-be-prepared beverage, query the material recipe of the beverage, and determine the material recipe of the beverage to be currently prepared. In practical applications, the above input unit may be a barcode scanner. After a user places an order, a two-dimensional code corresponding to the beverage in the order is generated (the two-dimensional code can be printed on a paper slip by a printer). The barcode scanner can be connected to or integrated with the beverage preparation apparatus. When the barcode scanner scans the two-dimensional code, the beverage in this order is identified, then the recipe of the beverage is identified, and then beverage preparation is started. The type of the input unit is not limited in present disclosure, and is determined based on the actual situation.

After the material recipe of the beverage to be currently prepared is determined, the controller 500 controls at least one liquid sub-pump 401 of the multiple liquid sub-pumps 401 to perform the first rotation operation based on the material recipe of the beverage to be currently prepared, and controls the at least one liquid sub-pump 401 to perform the second rotation operation. That is, after the material recipe of the beverage to be currently prepared is determined, the controller 500 controls at least one liquid sub-pump 401 of the multiple liquid sub-pumps 401 to perform the first rotation operation based on the material recipe of the beverage to be currently prepared, such that a required weight of material is outputted via the liquid outlet. After the required weight of material is outputted, the controller 500 further controls the above at least one liquid sub-pump 401 to perform the second rotation operation to retract the material in the liquid delivery tube.

From the above, the beverage preparation apparatus functions only requiring the operator to confirm the material recipe of the to-be-prepared beverage, and the subsequent preparation process is automatically completed by the beverage preparation apparatus, which greatly improves beverage preparation efficiency and saves labor costs. Thus, the beverage preparation apparatus improves beverage preparation efficiency and saves labor costs while ensuring the taste of the beverage.

In conclusion, a liquid material dispensing method and a beverage preparation apparatus are provided according to the present disclosure. The dispensing method includes: when the liquid dispensing apparatus is used for liquid material dispensing, the liquid pump is controlled by the controller to perform the first rotation operation to output the liquid material; and after the liquid output operation is performed, the liquid pump is controlled by the controller to perform the second rotation operation in the opposite direction to the direction of the first rotation operation. Thus, with this dispensing method, after the liquid output operation is performed, a retraction operation is performed on the liquid material in the liquid delivery tube to drive the liquid material in the liquid delivery tube toward the liquid storage tank, thereby reducing the probability of the liquid material in the liquid delivery tube dripping from the liquid outlet. This effectively prevents the liquid material in the liquid delivery tube from dripping after the liquid output operation is performed, thereby effectively addressing the issue of inaccurate liquid dispensing of the liquid material, contributing to ensure the taste of the beverage.

**Embodiment 1:** A liquid material dispensing method for controlling a liquid dispensing apparatus to dispense a liquid material is provided. The liquid dispensing apparatus includes a liquid storage tank, a liquid outlet, a liquid pump, and a controller, the liquid storage tank being configured for storing the liquid material, the liquid storage tank being connected to the liquid outlet via a liquid delivery tube, and the liquid pump being configured to output, controlled by the controller, the liquid material stored in the liquid storage tank via the liquid outlet. The dispensing method includes:
controlling, by the controller, a motor in the liquid pump to perform a first rotation operation in a first direction, to output the liquid material via the liquid outlet; and
in response to a condition for stopping outputting the liquid material being triggered, controlling, by the controller, the motor in the liquid pump to perform a second rotation operation in a second direction to retract the liquid material in the liquid delivery tube, where the second direction is opposite to the first direction.

**Embodiment 2:** In the dispensing method according to Embodiment 1, the controlling, by the controller, the motor in the liquid pump to perform the second rotation operation in the second direction includes:
obtaining a first rotation amount; and
controlling, by the controller, the motor in the liquid pump to perform the second rotation operation based on the first rotation amount.

**Embodiment 3:** In the dispensing method according to Embodiment 1 or 2, the obtaining the first rotation amount includes:
determining a reverse rotation coefficient; and
determining the first rotation amount based on a product of the reverse rotation coefficient and a preset rotation amount.

**Embodiment 4:** In the dispensing method according to any one of Embodiments 1, 2 and 3, the determining the reverse rotation coefficient includes:
obtaining a viscosity of the liquid material;
determining, based on the viscosity and a first correspondence, the reverse rotation coefficient for the second rotation operation performed by the motor in the liquid pump, where
the first correspondence is a pre-configured correspondence between the viscosity of the liquid material and the reverse rotation coefficient.

**Embodiment 5:** In the dispensing method according to any one of Embodiments 1 to 4, the obtaining the viscosity of the liquid material includes:
obtaining a current temperature of the liquid material in the liquid storage tank;
determining a current viscosity of the liquid material in the liquid storage tank based on the current temperature of the liquid material in the liquid storage tank and a second correspondence, where
the second correspondence is a pre-configured correspondence between the temperature of the liquid material and the viscosity.

**Embodiment 6:** The dispensing method according to any one of Embodiments 1 to 5 further includes:
recording the first rotation amount; and
after the second rotation operation is completed, compensating, in response to the motor in the liquid pump performing the first rotation operation in the first direction for a second time, a rotation amount of the motor in the liquid pump during the first rotation operation performed for the second time, based on the first rotation amount.

**Embodiment 7:** A beverage preparation apparatus includes a liquid dispensing apparatus, the liquid dispensing apparatus includes a liquid storage tank, a liquid outlet, a liquid pump, and a controller, where
the liquid storage tank is configured for storing a liquid material, the liquid storage tank is connected to the liquid outlet via a liquid delivery tube, the liquid pump is configured to be controlled by the controller to output the liquid material stored in the liquid storage tank via the liquid outlet.

The controller is configured to: control a motor in the liquid pump to perform a first rotation operation in a first direction, to output the liquid material via the liquid outlet; and in response to a condition for stopping outputting the liquid material being triggered, control the motor in the liquid pump to perform a second rotation operation in a second direction to retract the liquid material in the liquid delivery tube, where the second direction is opposite to the first direction.

**Embodiment 8:** In the beverage preparation apparatus according to Embodiment 7, the controller is further configured to: record a first rotation amount; and after the second rotation operation is completed, in response to the motor in the liquid pump performing the first rotation operation in the first direction for a second time, compensate a rotation amount of the motor in the liquid pump during the first rotation operation performed for the second time, based on the first rotation amount.

**Embodiment 9:** In the beverage preparation apparatus according to Embodiment 7 or 8, the liquid storage tank includes multiple liquid storage sub-tanks, and the multiple liquid storage sub-tanks are configured for storing their respective materials.

The liquid pump includes multiple liquid sub-pumps, the multiple liquid sub-pumps are in one-to-one correspondence with the multiple liquid storage sub-tanks and are configured to be controlled by the controller to deliver the respective materials in the multiple liquid storage sub-tanks to the liquid outlet via the liquid delivery tube.

**Embodiment 10:** The beverage preparation apparatus according to any one of Embodiments 7 to 9 further includes an input unit configured to determine a material recipe for a current to-be-prepared beverage based on a user input.

The controller is configured to control at least one liquid sub-pump of the multiple liquid sub-pumps to perform the first rotation operation based on the material recipe, and control the at least one liquid sub-pump to perform the second rotation operation.

The above embodiments in this specification are described in a progressive, parallel, or a combination of progressive and parallel manner. Each of the embodiments is mainly focused on describing its differences from other embodiments, and references may be made among these embodiments with respect to the same or similar portions. For the device disclosed in the embodiments, as it corresponds to the method disclosed in the embodiments, the description is relatively simple, and relevant details can be referred to the description of the method.

It should be noted that in the description of the present disclosure, the orientation or positional relationships indicated by terms such as "upper", "lower", "top", "bottom", "inner", "outer", and the like are based on the orientation or positional relationships shown in the drawings, and are merely for the convenience of describing the present disclosure and the simplification of the description, and do not indicate or imply that the referenced device or element must have a specific orientation, be constructed and operated in a specific orientation, which therefore should not be construed as limiting the present disclosure. A component considered as being "connected" to another component may be directly connected to another component or an intermediate element is provided.

It should be further noted that relationship terms such as "first" and "second" herein are only used to distinguish one entity or operation from another entity or operation, rather than to necessitate or imply that an actual relationship or order exists between these entities or operations. Furthermore, the terms "comprising", "including", or any other variation thereof are to cover a non-exclusive inclusion, such that an article or device including a series of factors not only include the listed factors, but also include other factors not explicitly listed, or also include inherent factors of the article or device. Without more limitations, a factor defined by a sentence "include one..." does not exclude a case that there is another same factor in the process, the method, the object or the device including the described factor.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A liquid material dispensing method for controlling a liquid dispensing apparatus to dispense a liquid material, the liquid dispensing apparatus comprising a liquid storage tank, a liquid outlet, a liquid pump, and a controller, the liquid storage tank being configured for storing the liquid material, the liquid storage tank being connected to the liquid outlet via a liquid delivery tube, the liquid pump being configured to output, controlled by the controller, the liquid material stored in the liquid storage tank via the liquid outlet, **characterized in that** the dispensing method comprises:
controlling, by the controller, a motor in the liquid pump to perform a first rotation operation in a first direction, to output the liquid material via the liquid outlet; and
in response to a condition for stopping outputting the liquid material being triggered, controlling, by the controller, the motor in the liquid pump to perform a second rotation operation in a second direction to retract the liquid material in the liquid delivery tube, wherein the second direction is opposite to the first direction.

2. The dispensing method according to claim 1, wherein the controlling, by the controller, the motor in the liquid pump to perform the second rotation operation in the second direction comprises:
obtaining a first rotation amount; and
controlling, by the controller, the motor in the liquid pump to perform the second rotation operation based on the first rotation amount.

3. The dispensing method according to claim 2, wherein the obtaining the first rotation amount comprises:
determining a reverse rotation coefficient; and
determining the first rotation amount based on a product of the reverse rotation coefficient and a preset rotation amount.

4. The dispensing method according to claim 3, wherein the determining the reverse rotation coefficient comprises:
obtaining a viscosity of the liquid material;
determining, based on the viscosity and a first correspondence, the reverse rotation coefficient for the second rotation operation performed by the motor in the liquid pump, wherein
the first correspondence is a pre-configured correspondence between the viscosity of the liquid material and the reverse rotation coefficient.

5. The dispensing method according to claim 4, wherein the obtaining the viscosity of the liquid material comprises:
obtaining a current temperature of the liquid material in the liquid storage tank;
determining a current viscosity of the liquid material in the liquid storage tank based on the current temperature of the liquid material in the liquid storage tank and a second correspondence, wherein
the second correspondence is a pre-configured correspondence between the temperature of the liquid material and the viscosity.

6. The dispensing method according to claim 2, further comprising:
recording the first rotation amount; and
after the second rotation operation is completed, compensating, in response to the motor in the liquid pump performing the first rotation operation in the first direction for a second time, a rotation amount of the motor in the liquid pump during the first rotation operation performed for the second time, based on the first rotation amount.

7. A beverage preparation apparatus, **characterized by** comprising a liquid dispensing apparatus, wherein the liquid dispensing apparatus comprises:
a liquid storage tank, a liquid outlet, a liquid pump, and a controller; and wherein
the liquid storage tank is configured for storing a liquid material, the liquid storage tank is connected to the liquid outlet via a liquid delivery tube, the liquid pump is configured to be controlled by the controller to output the liquid material stored in the liquid storage tank via the liquid outlet; and
the controller is configured to: control a motor in the liquid pump to perform a first rotation operation in a first direction, to output the liquid material via the liquid outlet; and in response to a condition for stopping outputting the liquid material being triggered, control the motor in the liquid pump to perform a second rotation operation in a second direction to retract the liquid material in the liquid delivery tube, wherein the second direction is opposite to the first direction.

8. The beverage preparation apparatus according to claim 7, wherein the controller is further configured to: record a first rotation amount; and after the second rotation operation is completed, in response to the motor in the liquid pump performing the first rotation operation in the first direction for a second time, compensate a rotation amount of the motor in the liquid pump during the first rotation operation performed for the second time, based on the first rotation amount.

9. The beverage preparation apparatus according to claim 7, wherein the liquid storage tank comprises a plurality of liquid storage sub-tanks, and the plurality of liquid storage sub-tanks are configured for storing their respective materials; and
the liquid pump comprises a plurality of liquid sub-pumps, the plurality of liquid sub-pumps are in one-to-one correspondence with the plurality of liquid storage sub-tanks and are configured to be controlled by the controller to deliver the respective materials in the plurality of liquid storage sub-tanks to the liquid outlet via the liquid delivery tube.

10. The beverage preparation apparatus according to claim 9, further comprising:
an input unit, configured to determine a material recipe for a current to-be-prepared beverage based on a user input, wherein
the controller is configured to control at least one liquid sub-pump of the plurality of liquid sub-pumps to perform the first rotation operation based on the material recipe, and control the at least one liquid sub-pump to perform the second rotation operation.
